# EUROPEAN PATENT APPLICATION

(11) **EP 3 185 372 A1**
(43) Date of publication of application: **28.06.2017**
(21) Application number: 15201707.5
(22) Date of filing: 21.12.2015
(51) Int. Cl.: H01S 3/06, H01S 3/081, H01S 3/07, H01S 3/08, H01S 3/083, H01S 3/11, H01S 3/139

(54) **HIGH POWER MULTI-PASS LASER OSCILLATOR**

(71) Applicant: ETH Zurich, 8092 Zurich (CH); Paul Scherrer Institut, 5232 Villigen (CH)
(72) Inventor: ANTOGNINI, Aldo, 5301 Siggenthal Station (CH); SCHUHMANN, Karsten, 70569 Stuttgart (DE)

(57) **Abstract**

The invention presents a scheme overcoming power and energy limitations of state-of-the-art multi-pass laser oscillator. Multi-pass oscillators designed according to this disclosure show improved stability properties for variations of the active medium thermal lens enabling scalability to an arbitrary number of passes though the active medium. This invention applies in particular to high-average power, high-energy mode-locked lasers and to thin-disk lasers. The invention utilizes the soft aperture effect occurring in pumped active media to realize a multi-pass oscillator whose range of stability for variations of the thermal lens in the active medium is similar to the stability achievable with a single pass oscillator. The roundtrip in such a multi-pass oscillator is given by a sequence of segments with identical layout. The ray transfer matrix of this segment describes a stable optical ring resonator.

## Description

### TECHNICAL FIELD OF THE INVENTION

The invention relates to a multi-pass oscillator overcoming power and energy limitations of state-of-the-art multi-pass oscillator designs. Multi-pass oscillators according to this disclosure show improved stability properties for variations of the active medium thermal lens, enabling scalability to an arbitrary number of passes through the active medium. This invention particularly applies to high-average power lasers operating at TEMOO, high-energy mode-locked lasers and to thin-disk lasers.

### DISCUSSION OF THE BACKGROUND

Lasers delivering ultra-short pulses with length in the range of 100 fs to 10 ps are of great interest for industrial applications. Such lasers permit material removal by evaporation with minimal thermal load to the bulk material. This is required for example for processing of sensitive materials like thermally treated materials, composite materials or semiconductors. In addition, the absence of a melted phase when using ultra-short pulses prevents the re-deposition of material removed in the machining process. This allows for drilling, engraving and cutting with an unmatched precision. To date, the majority of these lasers (thin-disk lasers excluded) are designed as complex oscillator-amplifier systems delivering moderate average power. Therefore, material processing using ultra-short pulses is usually restricted to small-scale applications. The desire to machine large-scale components as solar cells, carbon-fiber-reinforced polymer and chemically pretensioned glass (e.g. Gorilla glass) [Gattass, 2008], and to increase overall production throughput leads to a rising demand for high average power mode-locked lasers.

### Thin-disk laser

Thin-disk lasers [DE 4344227 A1] have gained increased attention due to a number of favorable properties. The most important are power- and energy-scalability which are achieved simply by increasing the pump area (at constant pump power density) and the laser mode size at the thin-disk (active medium) position. Furthermore, thin-disk laser can be pumped with commercial high-power diode lasers, with an optical-to-optical efficiency of up to 80%. Thin-disk lasers have been operated also in mode-locked [US 6834064 B1 regime very successfully [Saraceno 2012].

### Thin-disk mode-locked lasers with long cavities

By increasing the cavity length and consequently the roundtrip time, mode-locked laser oscillators with increased pulse energy have been realized, directly suited for machining applications [US 7590156 B1]. Because of the small gain of the thin-disk, the energy of the pulse circulating in the cavity is several times larger than the out-coupled pulse energy. Aside from the problematics related with the pulse induced damage, the high intensity of the pulses leads to significant non-linear dispersion in all cavity internal materials including air. For high-power lasers, this can hinder stable mode-locking. Several successful mode-locked lasers having a long cavity and low gain per roundtrip were realized within an evacuated laser housing [Saraceno 2014].

### Multi-pass thin-disk laser oscillator based on 4f-imaging

The cavity roundtrip gain can be increased by realizing several passes in the active medium (or media) per roundtrip leading to a cavity internal pulse energy only moderately larger than the energy of the out-coupled pulses. Consequently, non-linear effects are reduced allowing high power mode-locked operation even in air. Relay 4f-imaging from pass to pass is typically used to realize a large number of passes in the active medium (or a plurality of active media) with similar beam waists [DE 10140254 A1]. This scheme, besides enabling several reflections (passes) on the thin-disk, also gives rise to a long cavity. Therefore, this multi-pass laser concept with 4f-imaging is used in commercial high-average power mode-locked lasers [Gottwald 2012]. However, the average output power of these mode-locked lasers is limited by thermal lensing effects in the active medium [Baer 2012].

The stability range of a laser resonator shrinks quadradically with the size of the fundamental eigenmode and consequently linearly with the laser output power for TEM00 [Baer 2012]. Thus, generally speaking, thermal lens effects in particular at the active medium limit the maximal reachable laser output power. In a multi-pass oscillator with 4f-imaging the focal strengths of the various passes in the active medium (or in a plurality of active media) are adding up resulting in a shrinkage of the stability region for variation of the active medium (or media) focal power. More precisely, the width of the stability region is inversely proportional to the number of passes in the active medium. This shrinkage of the stability region in turn limits power- and energy-scaling properties of the multi-pass oscillator.

The problem according to the invention is therefore to provide a multi-pass oscillator that overcomes the above mentioned problems, particularly the shrinking of the stability region (for variation of active medium thermal lens) with increasing number of passes in the active medium.

### GENERAL DESCRIPTION OF THE INVENTION

A multi-pass oscillator according to claim 1 solves the problem according to the invention.

The multi-pass laser oscillator, also referred to as multi-pass oscillator or multi-pass resonator, according to the invention is capable of high pulse energy and high average power capabilities with a stability region basically independent on the number of passes through the active medium for variation of the active medium thermal lens. The resonator of the multi-pass laser oscillator is based on a concatenation of identical or nearly identical segments, based on an identical layout. The optical layout of each segment corresponds to a roundtrip in an optically stable resonator. Each segment contains at least one pass of the resonating laser beam in the active medium. The active medium exhibits a soft aperture effect and a thermal lens effect, when the active medium is pumped. It is preferable that the segment is designed so that the mode waist at the various passes in the active medium are insensitive to variations of the medium thermal lens around the design value. The optical roundtrip in such a multi-pass laser oscillator comprises an integer number N of such segments with N>1.

### Concatenation of N optically stable segments

The multi-pass oscillator according to the invention can be understood by considering the optical layout of the underlying segment. The propagation of a Gaussian beam in an optical system can be described by a ray transfer matrix (also referred to as the ABCD-matrix), wherein the ray transfer matrix is particularly a 2x2 matrix, wherein A is the first entry (1,1) and D is the last entry (2, 2) of the ray transfer matrix. The ray transfer matrix of the segment underlying the multi-segment oscillator must fulfil the conditions |A+D|<2, that is, the stability conditions for stable resonators [Kogelnik 1966] excluding the boundaries of stability. The optical layout of the segment can be derived from any stable resonator. By concatenating N times such segments a multi-pass oscillator can be realized. Multi pass oscillators with N>1 in this document are also referred to as multi-segment oscillators.

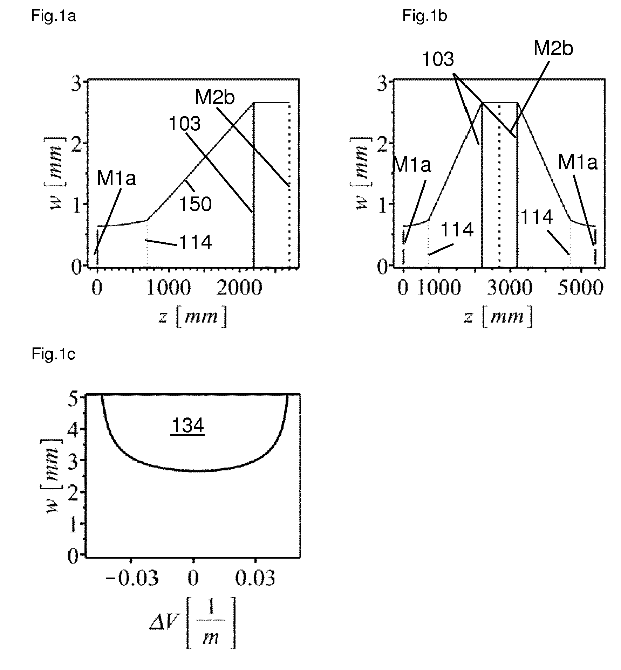

Figure 1 a for example shows a state-of-the-art dual-pass linear resonator formed by an end-mirror M1a, a convex mirror 114, a focusing active medium103 and an end-mirror M2b. As the active medium in this case is not used as an end-mirror, it is crossed twice per roundtrip. The roundtrip in this resonator is defined as segment associated to this resonator (Fig. 1 b). The corresponding stability plot for variation of the dioptric power of the active medium from the layout value is shown in Fig.1 c.

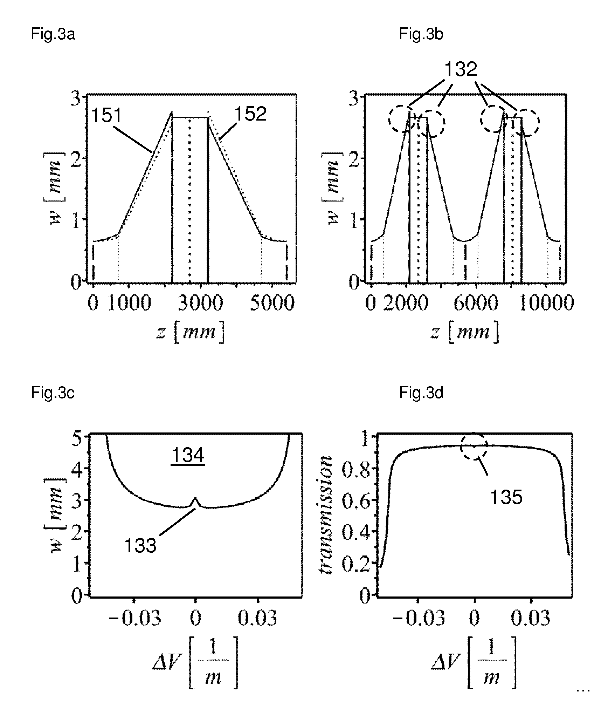

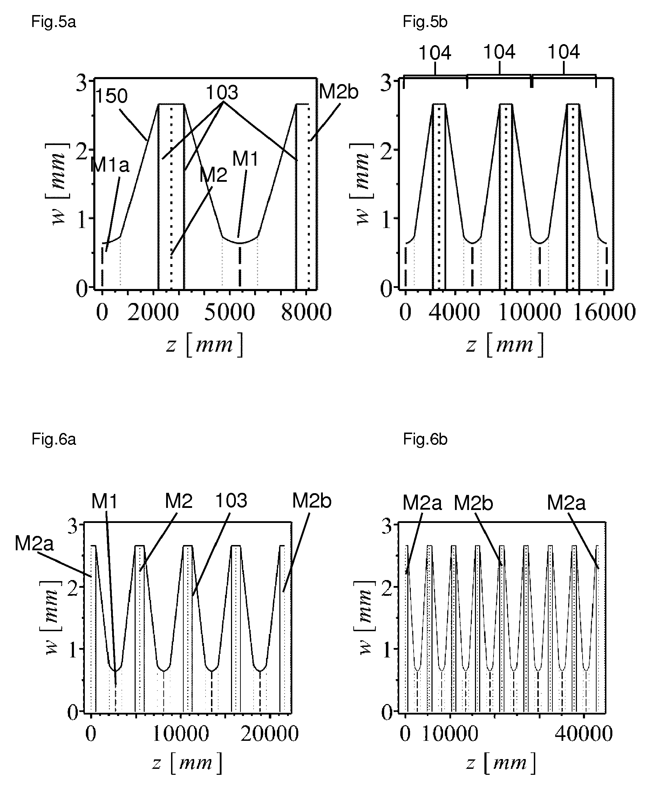

By concatenating N times such segments a multi-pass oscillator can be realized having 2N passes per roundtrip through the active medium. Figure 3b for example displays the eigenmode evolution for the roundtrip in the multi-pass resonator achieved by concatenating two segments of Fig. 1 b. The corresponding oscillator cavity layout is shown in Fig. 3a. Similarly, Fig. 5 and Fig. 6 show examples of roundtrips and layouts for multi-pass oscillators according to the invention resulting from concatenating 3 and 8 segments, respectively.

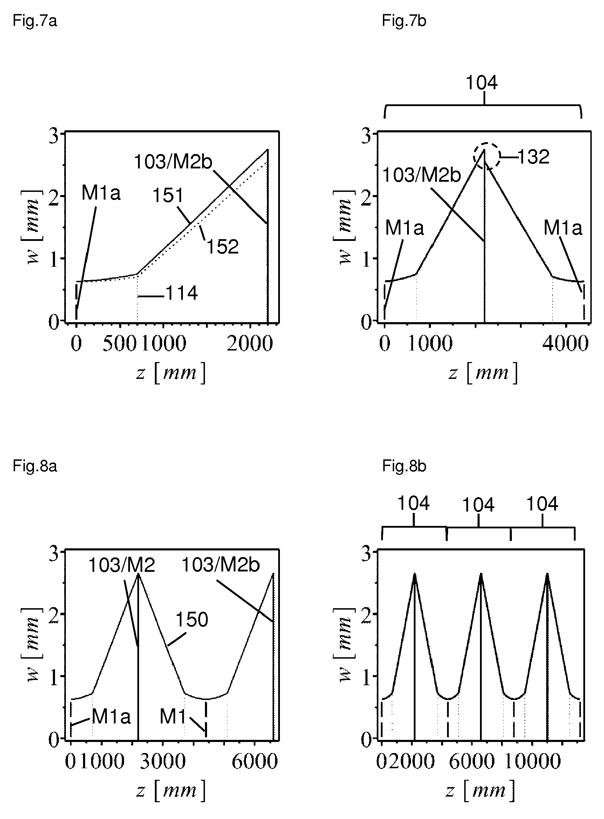

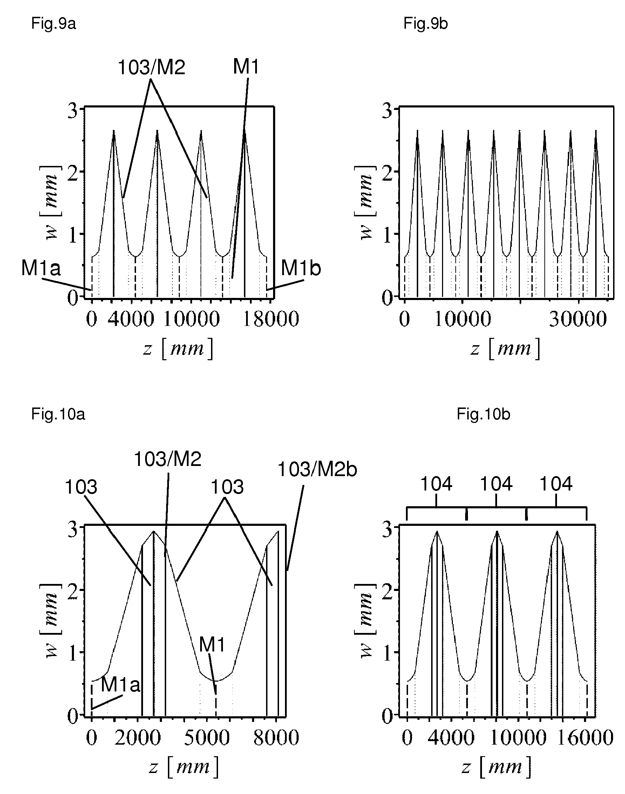

Figure 7a displays an example of a state-of-the-art single-pass linear oscillator cavity similar to Fig. 1, but in this case the active medium 103 is also a resonator end-mirror M2b. Therefore, the active medium is passed only once per roundtrip (see Fig. 7b). The concatenation of 3 and 8 of such segments is displayed in Fig. 8 and Fig. 9, respectively.

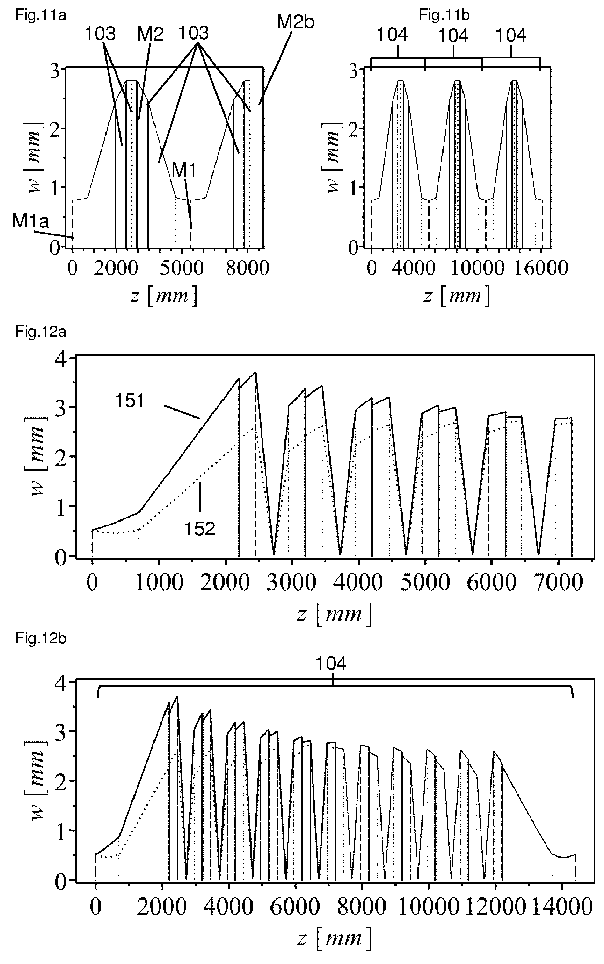

Generalizing this scheme, multi-pass resonators with N*K passes in the active medium per roundtrip can be realized, where K corresponds to the number of passes in the active medium within a segment, and N corresponds to the number of concatenated segments. Figure 10 shows an example of a multi-pass oscillator layout according to the invention with K=3 and N=3, while Fig. 11 shows an example of a multi-pass oscillator layout according to the invention with K=4 and N=3.

Figure 12 displays an example of a state-of-the-art multi-pass resonator with 11 passes through the active medium realized using multiple 4f-imaging. Using the notation introduced above, this layout classified as K=11 and N=1. Thus, a multi-pass oscillator based on this layout it is not comprised by the invention because it has only one segment (N=1).

### Soft aperture

Multi-pass laser oscillator designs with N>1 require consideration of the soft aperture effect occurring in particular in the active medium. Active media normally exhibit a soft aperture effect mainly due to the pumping process. The inhomogeneous pump profile leads to an inhomogeneous gain profile, which can be described as a superposition of a homogeneous gain and an aperture effect. This effective aperture can be approximated by a Gaussian transmission curve [Siegman 1986]. Due to this effect higher-order transversal modes experience higher losses (less gain). This effect can be used to ensure TEMOO operation in an optical oscillator.

Soft apertures have an influence on the laser beam waist. A Gaussian aperture applied to a Gaussian beam leads to a Gaussian beam with reduced waist 132. As a result each optical oscillator shows an infinite stability range. However, a large impact on the beam waist gives rise to high losses. Therefore, laser operation is actually only possible within the range defined approximatively by the stability region evaluated neglecting soft aperture effects.

### Multi-pass laser for N>1 and soft aperture

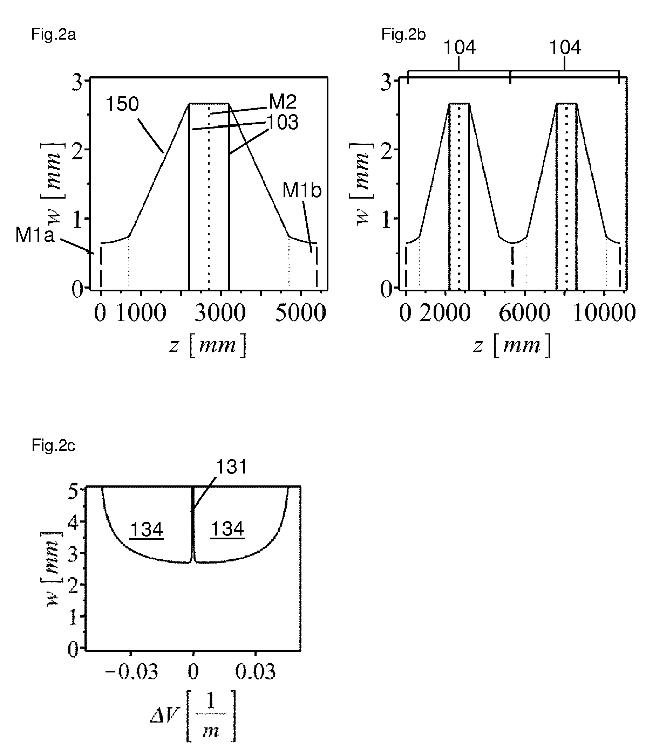

In Fig. 2c the stability plot for an N=2 and K=2 design has been evaluated neglecting the soft aperture effect but assuming that the two concatenated segments are not completely identical. Small differences between segments are unavoidable when practically realizing a multi-segment oscillator, in particular because of small variations of propagations lengths, incident angles and mirror curvatures. These small segment-to-segment deviations lead to a pole 131 which divides the stability region 134. At the pole the oscillator eigenmode waist (at the active medium position) shows an infinite deviation from the waist obtained in a single segment (see Fig. 1 c) that can be considered as the design value. At the pole location no laser operation can be achieved. When considering multi-segment laser oscillators, the stability zone is divided into multiple disconnected zones.

When eigenmode and stability of the multi-segment oscillator of Fig. 2 are computed including aperture effects (see Fig. 3), it turns out that the pole 131 in the stability plot 134 is reduced to a bump 133. At the bump position the beam waist differs from the waist obtained in the single segment by about 12% (compare to Fig. 1c). This strong impact on the beam waist (from pole to bump) resulting in a small sensitivity to thermal lens effects, can be obtained by a minimal increase of roundtrip losses 135 (see Fig. 3d). The useful stability region for the N=2 design of Fig. 3 when soft aperture effects are considered is basically identical with the stability region of the N₌1 design of Fig. 1. This property can be generalized for an arbitrary number of segments N (with identical layouts and small segment-to-segment deviations), where N is an integer greater than 1. So the stability region (properties) of a multi-pass oscillator according to the invention is basically independent on the number of segments N.

The multi-pass oscillator according to the invention comprises a concatenation of N segments with identical optical layouts wherein each segment has a ray transfer matrix (ABCD-matrix) fulfilling the condition |A+D|<2 when neglecting soft aperture effects. When all segments are identical, the stability plot of a multi-segment oscillator is identical with the stability plot of an oscillator made of only one of these segments (N=1). For segment-to-segment deviations, which are unavoidable when building or assembling a multi-pass oscillator, in particular because of small variations of propagation lengths and radii of curvatures, poles in the stability region arise. However, these poles can be significantly damped by a small soft aperture effect which is present in particular in the active medium so that the resulting stability region of the multi-pass oscillator, with segment-to-segment deviations corresponds approximately to the stability region for N=1 (compare Fig. 1 c with Fig. 3c).

For a multi-segment oscillator these segment-to-segment variations have to be sufficiently small so that the beam waists at the active medium positions for the multi-segment oscillator with nearly-identical segments does not differ by more than a factor of 1.8 from the waists at the active medium positions of the corresponding multi-segment oscillator with identical segments. This has to be valid for thermal lens variations of the active medium given by |A+D|<1.5 where these matrix elements are evaluated for a segment without considering soft aperture effects. Note that the calculation of the waists requires considering the soft aperture effect. Furthermore, note that for this comparison all passes in the active medium (or media) for a multi-pass resonator with non-identical segments are individually compared with the design values.

It is explicitly noted, that the beam waists at the active medium positions for the multi-segment oscillator with nearly-identical segments do not differ by more than a factor of 1.8 from the waists at the active medium positions for identical segments. That is, the beam waists at the active medium positions for non-identical segments are neither 1.8-times larger nor 1.8-times smaller than the waists at the active medium positions of the corresponding multi-segment oscillator with identical segments.

Even though the poles are damped by the soft aperture, the resonator roundtrip transmission 136 is decreasing substantially for increasing segment-to-segment differences of the various segments forming the multi-pass laser oscillator. The segment-to-segment deviations has to be kept minimal by having
- the same active medium each segment,
- the same sequence of optical elements and similar free propagation distances in each segment.

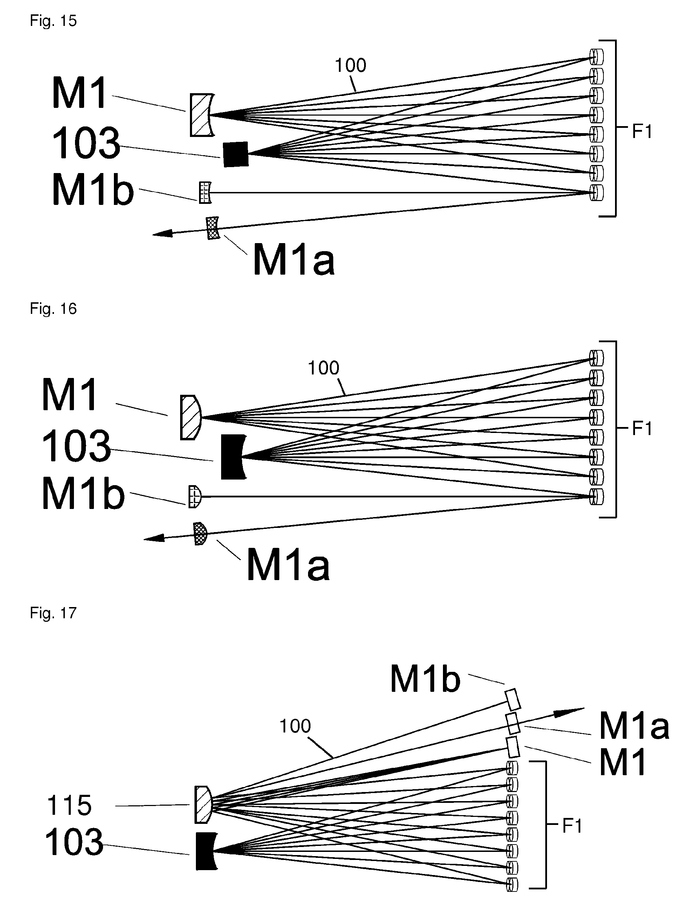

Some exemplary embodiments according to the invention with a single active medium are shown in Figs. 15-26 and Figs. 28-29. The stronger the soft aperture effect of the active medium is, the larger the deviations of the - ideally identical - optical properties can be. Note that as the active medium usually shows a soft aperture effect, normally no additional apertures further reducing efficiency need to be used. However, a tighter aperture can be implemented to compensate for larger segment-to-segment deviations, but at expense of efficiency and gain decrease.

According to another embodiment of the invention, this design applies also for multi-segment oscillators comprising a plurality of active media (whose number is referred to as G) as long as each active media is passed K(g) times in each segment, with g representing the various active media, wherein g is in 1...G (G and g are integer greater than or equal to 1).

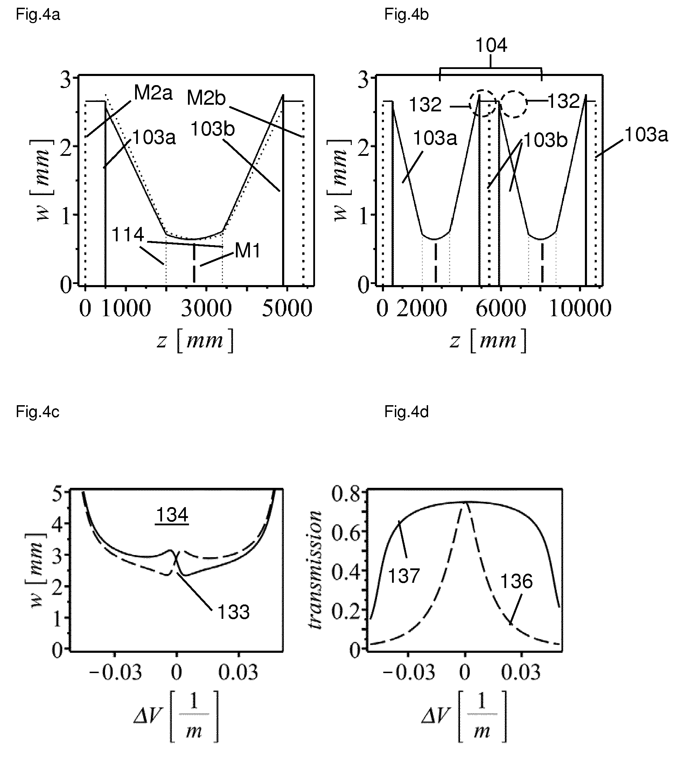

As shown by 136 in Fig. 4d to have a large stability region and efficient laser operation the multi-pass oscillator according to the invention has to have the same active medium or media in each individual segment and each active media is passed K(g) times in each segment.

An optical element with zero focal strength and zero optical length can be inserted at any position inside the multi-pass oscillator without affecting the oscillator eigenmode. Practically any optical element has a finite focal strength and a finite optical length. However, insertion of such additional optical element in only one (or more) segment(s) is still allowed as long as limited overall distortions of the oscillator eigenmode occur. For example, it is advantageous to insert a saturable absorber so that the resonating laser beam passes the saturable absorber only once (or twice) per roundtrip in the multi-segment oscillator in order to minimize thermal load and maximize laser efficiency. The placement of the saturable absorber in only one (or more) segments introduces additional segment-to-segment deviations, which have to be reasonable small, so that the overall segment-to-segment deviations can be controlled as previously explained by the soft aperture effect. In such a way, stable laser operation is guaranteed.

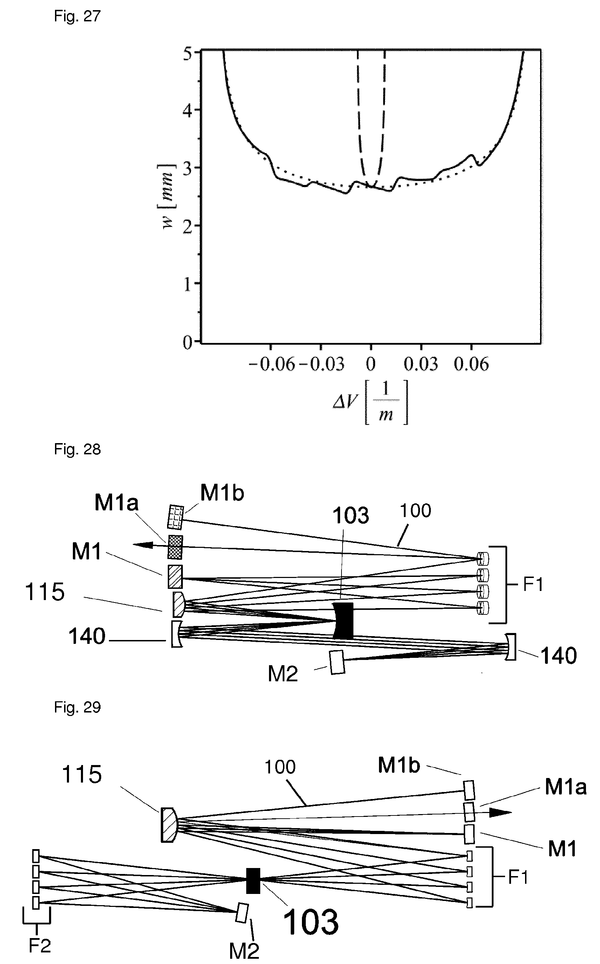

The multi-pass oscillator specific arrangement of concatenated segments featuring intrinsic stability, together with the soft aperture effect exhibited by the active medium, lead to a stability region of the multi-segment oscillator with N>1 1 comparable to the stability region of an oscillator comprising only one (N=1) such segments (see Fig. 27). Deviations of the laser eigenmode waist from the design value, which may occur due to thermal lens variations or small segment-to-segment differences, are stabilized by the soft aperture effect of the active medium (compare solid line in Fig. 27 and 133 in Fig. 3). In comparison, in a multi-pass laser resonator based on 4f-imaging the soft aperture effect leads to a decrease of beam diameter from pass to pass as shown for example in Fig. 12. The multi-pass laser oscillator according to this invention is particularly formed by concatenating N segments with identical optical layout, said segment layout exhibiting the stability properties of a stable resonator which, expressed using the ray transfer matrix, reads |A+D|<2 (A and D are the corresponding matrix elements of the segment evaluated neglecting soft aperture effects). Each segment comprises K passes through the active medium where N is an integer number greater than 1 and K an integer number greater or equal to 1. Therefore, per roundtrip in the multi-pass resonator the laser beam passes N*K times in the active medium.

According to another embodiment of the invention, the segment is designed to minimize its sensitivity to thermal lens variations of the active medium. The segment is designed such that at the multi-pass oscillator operating conditions the eigenmode waist of the segment at the active medium position does not strongly depend on the changes of the active medium thermal lens. Advantageous are designs where the eigenmode waist of the segment at the active medium position shows the minimal derivative (absolute value of the derivative) versus changes of the thermal lens of the active medium (see for example Fig. 1 c). Particular advantageous are layouts where said derivative is zero, so that in first approximation the waist at the active medium does not depend on small variations of the thermal lens. Consequently, inheriting the stability properties of the segment, the multi-segment oscillator also features this insensitivity.

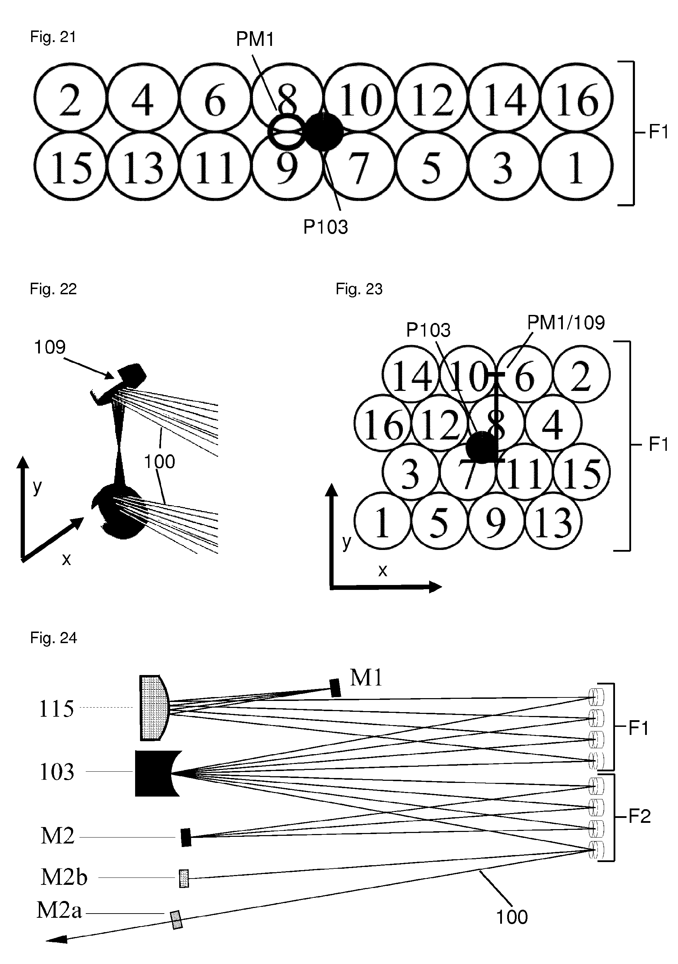

According to another embodiment of the invention, for a given number of passes N*K it is preferable to have small K and large N. This embodiment allows advantageously reducing the sensitivity to thermal lens variations. In fact, when soft aperture effects are considered, the stability range of a multi-segment configuration shows basically the same stability range as a single segment (see Fig. 27). Some peculiar examples with K=1 are given in Figs. 15-20, and for K=2 in Figs. 24, 28 and 29. On the other hand, segments with large K (see Fig. 12) show larger sensitivity to thermal lens effects as shown in Fig. 27. In fact, for K>1 (sum of K(g)>1 for multiple active media) the thermal lens effect of the various passes within a segment are adding up resulting in a shrinkage of the stability zone. Furthermore, for apertures not being perfectly Gaussian excitation of higher-order transverse components occur which reduces the circulating beam quality of the multi-pass oscillator. Such excitations increase with K.

According to another embodiment of the invention, said segment-to-segment variations are so small that the oscillator eigenmode waists at each pass in the active medium do not differ by more than a factor of 1.5, particularly not more than 1.3, from the design value within a range of the active medium's thermal lens variations.

Also, here the term "differ" is explicitly meant to include both kind of deviations, that 1.5-times (1.3-times, respectively) larger and 1.5-times (1.3-times, respectively) smaller ones.

Alternatively the multi-pass laser oscillator according to the invention could be claimed as follows.

Multi-pass oscillator, comprising a resonator and an active medium,
wherein the active medium exhibits a soft aperture effect and a thermal lens effect, when the active medium is pumped,
wherein the multi-pass oscillator is configured such that a roundtrip of a resonating laser beam in the multi-pass oscillator comprises a sequence of N concatenated segments (104),
wherein each segment fulfills the criteria |A+D|<2 of a stable resonator,
wherein the segments comprise an identical optical layout, wherein N is an integer number greater than 1,
   wherein each of said segments is arranged to provide a resonating laser beam with K passes through the active medium, wherein K is an integer number greater or equal to 1,
wherein the segments comprise identical or nearly identical optical properties
wherein each segment has been designed to show small sensitivity to variations of the active medium thermal lens.

According to another embodiment of the invention, if multiple passes through the active medium are realized within one segment, the passes are particularly placed at close distance from each other in order to realize a stable beam waist for variation of thermal lens. As a rule of thumb all passes should be within a distance smaller than ½ of the Rayleigh length of a resonating laser beam at the active medium position. It is noted that the physical propagation distances are particularly not equivalent to the effective optical propagation distance (the B value of the ABCD-matrix). For example, a pair of Galilean telescopes can be used to virtually stretch a propagation while a 4f-imaging has zero effective optical length. Thus, each segment of the multi-pass oscillator for example can comprise K-1 short propagations Sₖ for k=1..K-1 and a single optically long propagation L. The sum of the various effective lengths of the short propagations is smaller than the long propagation effective length. For example for K=4 the segment can be arranged in the following manner L-A-S₁-A-S₂-A-S₃-A where A represents the active medium.

According to another embodiment of the invention, each segment 104 is preferably made of two identical sequences of optical elements, one inverted relative to the other, as shown for example in Fig 5b, yielding a symmetric segment design. For example for K=4 the segment is given by L/2-A-S₁-A-S₂-A-S₁-A-L/2, where L/2 stands for half the long propagation. Note that S₃ in this case is identical to S₁ as the segment is symmetric.

According to another embodiment of the invention, mirrors of type m1 are arranged in between two segments. For example for K=4 the concatenation of two segments follows the scheme: ... L/2-A-S₁-A-S₂-A-S₁-A-L/2-M1-L/2-A-S₁-A-S₂-A-S₁-A-L/2... where M1 is a mirror of type m1.

According to another embodiment of the invention, mirrors of type m2 are arranged in the centre (symmetry point) of each segment. For example, for K=4 the concatenation of two segments follows the scheme: ...L/2-A-S₁-A-S₂/2-M2-S₂/2-A-S₁-A-L/2-M1-L/2-A-S₁₋A-S₂/2-M2-S₂/2-A-S₁-A-L2... where M1 is a mirror of type m1 and S₂/2 represents half of the S₂ short propagation. Note that mirrors of type m1 have common radius of curvature and are placed in between the segments, and mirrors of type m2 have common radius of curvature and are arranged in the center of the segment.

According to another embodiment of the invention, that the layout of the multi-pass oscillator according to the invention is configured such that for multi-pass oscillators with N>2 a plurality of mirrors of type m1 are realized with a single mirror M1. Similarly, for practical applications it is preferable that the functionality of the various mirrors of type m2 are realized with a single mirror M2. The sharing of the mirrors M1 and M2 between the various segments minimizes possible segment-to-segment deviations and enables a more compact design of the multi-segment oscillator (see for example Figs. 15-21 and Figs. 23-29).

A multi-pass oscillator according to the invention comprises a closed resonator for the laser propagation, wherein said resonator is closed such that the succession of segments is maintained. Therefore, if the multi-pass oscillator according to the invention comprises a linear oscillator design, the end-mirrors of said multi-pass linear oscillator, for symmetry reasons, have to be placed between two adjacent segments or in the center (symmetry point) of a segment of the multi-pass oscillator. As a result there are four ways to close the optical propagation to form a multi-segment resonator:
a) A first mirror of type m1 is configured as a first resonator end-mirror M1a and a second mirror of type m1 is configured as a second resonator end-mirror M1b (see for example Figs. 2, 9, 15-21, 28 and 29),
b) A first mirror of type m2 is configured as a first resonator end-mirror M2a and a second mirror of type m2 is configured as a second resonator end-mirror M2b (see for example Fig. 4, 6 and 24),
c) One mirror type of type m1 is configured as a first resonator end-mirror M1a and one mirror of type m2 is configured as a second resonator end-mirror M2b (see for example Fig. 1, 5 and 11), or
d) One mirror of type m2 is configured as a first resonator end-mirror M2a and one mirror of type m1 is configured as a second resonator end-mirror M1 b.

According to another embodiment of the invention, the active medium is a thin-disk.

According to another embodiment of the invention, the multi-pass oscillator preferably comprises arrays of mirrors (F1, F2) particularly in order to support multiple passes propagation in a compact geometry, where F1 is a long-pass mirror-array placed in the long propagation L between active medium and mirrors of type m1, F2 is a short-pass mirror-array placed in the short propagation S between active medium and mirrors of type m2.

The working principle of the long-pass mirror-array F1 can be understood for example by considering Fig. 15 which represents a possible layout for a multi-pass laser oscillator with K=1 and N=16. The corresponding long-pass mirror-array F1 is also shown in Fig. 21. For example starting from the first resonator end-mirror M1 a the beam is reflected at the array-mirror 1 (see Fig. 21) towards the thin-disk 103 (active medium). From here, it proceeds to array-mirror 2 and is reflected towards M1. From M1 the beam travels back to the array at array-mirror 3, then to the thin-disk, array-mirror 4 until it reaches again M1. These scheme is iterated until the beam reaches array-mirror 16 and is reflected at the second end-mirror M1 b. From here the beam propagates the same path in backwards direction until it reaches again mirror M1 a terminating the roundtrip.

As is displayed in Fig. 21, for example, the reflection of the resonating laser beam on the thin-disk can correspond to a point reflection from array-mirror to array-mirror through P103. The point P103 in Fig. 21 represents the position where the axis of symmetry of the thin-disk intersects the mirror-array. Similarly, the points PM1 represents the projection of M1 on the mirror-array plane. Alternating reflections at PM1 and at P103 lead to a mirror-array layout where the mirrors are placed along two parallel lines. Layouts with K=1 forming a linear multi-segment oscillator as described for example in Figs. 15-20 can be realized using a long-pass mirror-array F1 following the same scheme as displayed in Fig. 21.

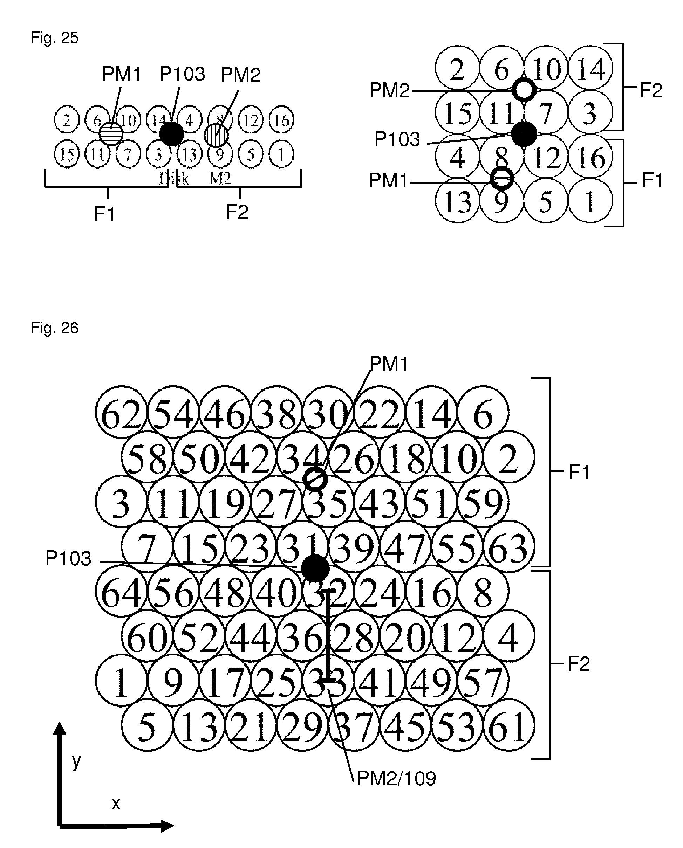

Similar considerations can be made for the short-pass F2 mirror-array arranged in the short propagation S that is between active medium and mirrors of type m2. For K=2 embodiments exist (see for example Figs. 24 and 25) where both long-pass mirror-arrays F1 and short-pass mirror-array F2 can be merged into a single mirror-array.

According to another embodiment of the invention, the multi-pass oscillator comprises a 4f-imaging arrangement in between active medium and mirror M2. This 4f-imaging does not only provide a zero effective propagation length (according to claim 3), but it is also used to realize multiple-passes on the same mirrors 140 as shown in Fig. 28. Using the same beam propagation as in [DE 10140254 A1] the said large aperture 4f-imaging stage can also be used to realize multiple short propagations Sₖ in each segment. In this way configurations with several passes per segment K can be comprised using just two additional focusing elements.

According to another embodiment of the invention at least one mirror of type m1 is a 45°-mirror-pair 109 (see for example Fig. 22) and/or at least one mirror of type m2 is a 45°-mirror-pair. For example, by using a 45°-mirror-pair as common mirror M1 in the layouts with K=1 shown in Fig. 15-20, other long-pass mirror-array layouts can be realized as shown for example in Fig. 23. In this case the beam routing from mirror to mirror of the mirror-array proceeds through alternating reflections at the thin-disk and at the 45°-mirror-pair. The use of a 45°-mirror-pair allows for a realization of a mirror-array with four lines and a hexagonal pattern.

The mirror array shown in Fig. 26 is another example obtained by using a 45°-mirror-pair 109 as a common mirror M2 in a multi-pass oscillator with K=2 as shown in Fig. 24. In this particular case, 64 passes in the active media are obtained in a very compact arrangement.

It is advantageous to use arrays with minimal cross section in order to reduce astigmatism and differences of path length of the various segments. For a given cross section the maximal number of beam passes can be realized when the mirrors are arranged in a regular pattern having similar extension in x- and y-directions (see for example Figs. 23 and 26).

The usage of a 45°-mirror-pair as shown in Fig. 22 as M1 or M2 mirror can also lead to an improvement of the alignment and pointing stability in y-direction. Similarly if the 45°-mirror-pair of Fig. 22 would be oriented along the x-direction, the improvement of the alignment sensitivity occurs in x-direction.

According to another embodiment of the invention at least one mirror of type m1 is a mirror-triplet configured as a corner cube reflector and or at least one mirror of type m2 is a mirror-triplet configured as a corner cube reflector. Its usage can result in an improved alignment and pointing stabilities in both x- and y-directions and leads to different pattern of the beam routing at the mirror-arrays.

It has to be noted that the above presented mirror-arrays can be adapted to generate larger number of passes while keeping the same scheme.

According to another embodiment of the invention the multi-pass laser oscillator comprises a ring-type resonator. A particular realization of a ring-type multi-segment resonator can be achieved using the same mirror-arrays configuration as presented for example in Figs. 21, 23, 25 and 26. In this case, the resonator roundtrip has to be closed by propagating the beam from the last mirror of the array F1/F2 to the first mirror of the same array through a reflection at a mirror M1 a/M2a, respectively.

According to another embodiment of the invention the multi-pass laser oscillator can be realized in various ways depending on the focal strength of the active medium, where the active medium can be also reflective (thin-disk). Focusing active media give rise to larger eigenmode sizes at the active media position and therefore are more suited for power- and energy-scaling as the focusing active medium can be part of a Galilean telescope. Some possible layouts for K=1 based on thin-disk are given in Figs. 15-20. Similar combinations can be applied also to multi-segment laser cavities with K=2 as shown for example in Fig. 24, 28 and 29. Other combinations are possible.

According to another embodiment of the invention the multi-pass laser oscillator comprises optical elements for example to control its temporal behavior (for example SESAM, Pockels cell), to control its spectral properties (for example frequency selective elements) to define its polarization (for example Brewster plates, thin film polarizers, retarding plates) to enforce unidirectional operation (for example Faraday rotator for ring oscillators) to introduce optical dispersion (for example chirped mirrors) to realize nonlinear conversion (for example a OPA or a self-phase modulation stage), or comprises combinations of these elements. Most of these optical elements show decreased performance when exposed to exceeding circulating optical power reducing power scaling for high-power lasers. The multi-pass laser oscillator significantly reduces these issues because it shows a reduced circulating power due to the increased gain per roundtrip. For a circular resonator the minimal power of the circulating beam is located right after a reflection of the beam at the out-coupler. Thus, this location is particularly suited for the placement of the above mentioned optical elements. For a linear resonator minimal circulating power is reached at the end-mirror M1b or M2b opposing the out-coupling mirror. Optical components as SESAM which shows similar scalability principle as the thin-disk are particularly suited for this multi-pass laser design and can be preferably inserted as resonator end-mirror M1b or M2b.

According to another embodiment of the invention, the multi-pass oscillator comprises an adaptive optical element passed K_{adaptive} times within each segment. Preferably this adaptive optical element is realized as a flexible mirror, and passed only once within a segment, in order to minimize thermal load. It is advantageous to position the adaptive element close to the active medium, to improve the quality of the compensation. For laser designs with an even number of passes per segment in the active medium, it is advantageous to use the adaptive mirror as M2. This adaptive mirror can be used to compensate active medium deformations up to a certain Zernike order: most importantly the first (tilt) and second (lens and astigmatism). This compensation further increases energy- and average power-scaling of the multi-pass oscillator presented in this disclosure. An adaptive mirror at position M2 is particularly suited for active feedback control. As the propagation within one segment corresponds approximatively to a Fourier propagation, the laser beam leaking from the M2 mirror itself can be used to generate the error signal controlling the M2 mirror tilt (both directions) to compensate the tilt of the active medium. Similarly, the beam leaking from the M1 mirror can be used to compensate for higher-order Zernike terms. For generating the error signals, the use of an external laser source resonantly coupled into the multi-pass oscillator is particularly advantageous.

Figure references made above are in no way intended to limit the scope of the disclosure but are solely exemplary embodiments of the multi-pass oscillator according to the invention. The same applies, for the following figures and figure descriptions.

### DESCRIPTION OF THE FIGURES

Fig. 1: (a) Schematic of a state-of-the-art linear oscillator cavity composed by a flat end-mirror M1a, a defocusing element 114, a focusing active medium 103 and another flat end-mirror M2b. The eigenmode waist w evolution along the optical axis z is also shown 150. (b) The waist evolution of the eigenmode for the full roundtrip in the oscillator shown in (a) is displayed together with the optical layout defining the segment. (c) Stability plot 134 for the oscillator presented in (a) for variations of the dioptric power ΔV of the active medium 103 from the layout value. Shown is the eigenmode waist at the active medium position versus variations of the dioptric power of the active medium due to thermal lens effects. In the notation used in the main text this laser resonator is of the type N=1 and K=2, where K stands for the number of passes in the active medium within the segment 104, and N for the number of segments per roundtrip. The vertical lines represent optical elements. The dashed vertical lines represent mirrors of type m1, the dotted vertical lines represent mirrors of type m2, the vertical thick solid lines represent the active medium, and the thin dotted lines represent a defocusing optical element 114. This notation is used also in Figs. 1-14.
Fig. 2: Example of a multi-pass oscillator with N=2 and K=2 based on the segment defined in Fig. 1b leading to 4 passes per roundtrip. A small segment-to-segment difference (relative segment length difference smaller than 0.4%) is assumed. (a) Schematic of the multi-pass oscillator cavity and cavity eigenmode. (b) Eigenmode waist evolution in a roundtrip along the multi-pass oscillator. (c) Corresponding stability plot of the multi-pass oscillator for variations of the dioptric power ΔV of the active medium from the layout value caused by thermal lens variations around the design value. Since no aperture effect has been considered, the eigenmode waist at the active medium position shows a pole 131, that is, the eigenmode waist for the configuration with segment-to-segment asymmetry shows an infinite deviation from the eigenmode waist obtained when considering only a single segment as shown in Fig. 1 c. The vertical lines follow the same notation as used in Fig. 1
Fig. 3: Similar as in Fig. 2, but in this case the eigenmodes and the stability plot have been computed considering the soft aperture effect at the active medium. Because of the soft aperture effect the beam waist is reduced when the beam crosses the active medium 132, leading to different waists for forward 151 and backward 152 propagations. The pole 131 given in Fig. 2c becomes here a small bump 133. At the bump position the eigenmode waist shows a deviation from the waist obtained for a single segment shown in Fig. 1c by about 12%. (d) Roundtrip transmission after the four passes through the soft aperture (of the active medium) in the multi-pass oscillator for variation of the thermal lens from the layout value. A small decrease of the transmission is visible in correspondence with the bump 133. ΔV is the variation of the dioptric power of the active medium from the design value due to variations of thermal lens effects.
Fig. 4: Example of a multi-pass oscillator with N=2 and K=2 based on the segment 104 of Fig. 1b similar to Fig. 3 but in this case the resonator end-mirror are of type m2. Moreover, in this case the two segments have different active media 103a and 103b. (a) Schematic of the multi-segment linear resonator which is defined by the end-mirror M2a, the active medium 103a, the defocusing optical element 114, the mirror M1, the defocusing element 114, the active medium 103b and the end-mirror M2b. The eigenmode waist evolution in this resonator is also shown. Due to aperture effects forward (solid line) and backwards (dotted line) slightly differ. (b) Roundtrip eigenmode evolution in the multi-segment oscillator. In this case the end-mirror M2a is positioned in the center of the segment. Nevertheless the roundtrip contains two complete segments. Because of the soft aperture effect the beam size is reduced when the beam crosses the active medium 132. (c) Corresponding stability plot at the two active media positions. Note that the two concatenated segments slightly differ because the active media are assumed to show a small variation of focal strength. (d) Roundtrip transmission after the four passes through the active media caused by the soft apertures for variations of the thermal lens at the active media for two cases: (continuous line 137) the focal strengths of the two active media 103a and 103b are varied equally; (dashed line 136) the two active media focal strength are varied with equal "amplitude" but with opposite sign. The latter case highlight the sensitivity to segment-to-segment deviations and demonstrate the performance decrease when different active media are implemented in different segments even though aperture effects are included. The vertical lines follow the same notation as used in Fig. 1. ΔV is the variation of the dioptric power of the active media from design values due to variations of thermal lens effects.
Fig. 5: Example of a multi-pass liner oscillator with N=3 and K=2 based on the segment 104 of Fig. 1 b. (a) Schematic of the multi-segment oscillator cavity, starting with mirror M1 a and ending with mirror M2b. (b) Corresponding eigenmode evolution in a roundtrip along the 3-segment resonator. The vertical lines follow the same notation as used in Fig. 1.
Fig. 6: Example of a multi-pass linear oscillator with N=8 and K=2 based on the segment 104 of Fig. 1 b. (a) Schematic of the multi-segment oscillator cavity, starting with mirror M2a and ending with mirror M2b. (b) Eigenmode evolution in a roundtrip along the 8-segment resonator. The vertical lines follow the same notation as used in Fig. 1.
Fig. 7: (a) Schematic of a state-of-the-art linear oscillator cavity (N=1) composed by a flat end-mirror M1a, a defocusing element 114, a focusing active medium 103 used also as end-mirror M2b. (b) Corresponding eigenmode evolution in a roundtrip. As the active medium is passed only once per roundtrip this oscillator has K=1. Because of the soft aperture effect the beam waist is reduced when the beam crosses the active medium 132, leading to different waists for forward 151 and backward 152 propagations. The vertical lines follow the same notation as used in Fig. 1.
Fig. 8: Example of a multi-pass linear oscillator with N=3 and K=1 based on the segment 104 of Fig. 7b but without soft aperture. (a) Schematic of the multi-pass oscillator cavity, starting with mirror M1 a and ending at the active medium also used as end-mirror M2b. (b) Eigenmode evolution in a roundtrip along the 3-segment resonator. The vertical lines follow the same notation as used in Fig. 1.
Fig. 9: Example of a multi-pass linear oscillator with N=8 and K=1 based on the segment 104 of Fig. 7b but without soft aperture. (a) Schematic of the multi-segment oscillator cavity, starting with mirror M1 a and ending at the end-mirror M1 b. (b) Corresponding eigenmode evolution in a roundtrip along the 8-segment resonator. The vertical lines follow the same notation as used in Fig. 1.
Fig. 10: Example of a multi-pass linear oscillator with N=3 and K=3. (a) Schematic of the multi-segment oscillator cavity, starting with mirror M1a and ending at the active medium also used as end-mirror M2b. (b) Corresponding eigenmode evolution in a roundtrip along the 3-segment resonator. The vertical lines follow the same notation as used in Fig. 1.
Fig. 11: Example of a multi-pass linear oscillator with N=3 and K=4. (a) Schematic of the multi-segment oscillator cavity, starting with mirror M1 a and ending at end-mirror M2b. (b) Corresponding eigenmode evolution in a roundtrip along the 3-segment resonator. The vertical lines follow the same notation as used in Fig. 1.
Fig. 12: Example of a state-of-the-art of a multi-pass oscillator based on 4f imaging with 11 passes per roundtrip. (a) Schematic of the multi-pass oscillator cavity, containing five 4f-imaging stages. The corresponding eigenmode evolution in this resonator is also shown. Due to aperture effects forward propagation 151 (solid line) and backwards propagation 152 (dotted line) have considerably different waists. (b) Roundtrip eigenmode evolution in the multi-pass oscillator. In our scheme this multi-pass oscillator can be classified as N=1 and K=11. The vertical lines represent the positions of optical elements. The vertical continuous lines represent the position of the active medium, the thin dashed vertical lines the position of the focusing elements forming the 4f-imaging stages.

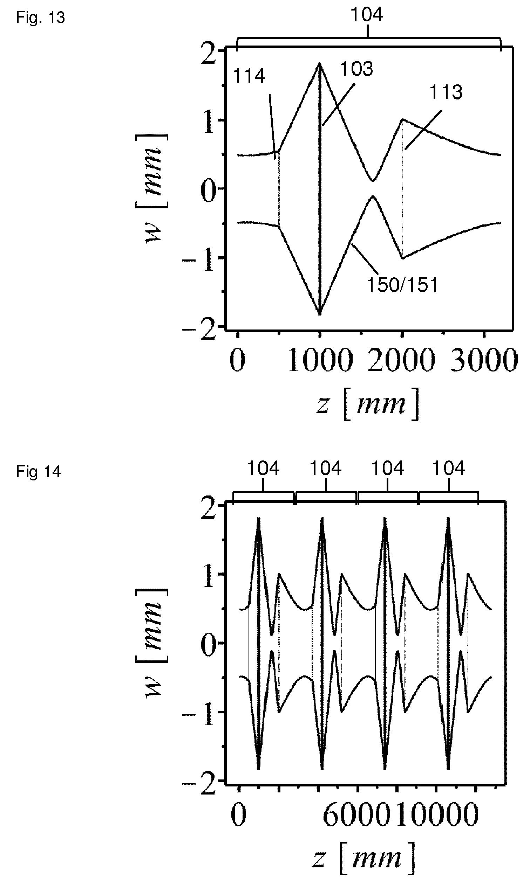

Fig. 13: Example of a state-of-the-art ring-oscillator layout with a single pass through the active medium. It comprises a defocusing element 114 and a focusing element 113. The continuous vertical lines represent the position of the active medium. The eigenmode evolution 150 in this resonator is also shown and is identical to a roundtrip. In our scheme this oscillator can be classified as N=1 and K=1.
Fig. 14: Example of a multi-pass ring-oscillator with N=4 and K=1 based on the segment 104 of Fig. 13. The vertical lines follow the same notation as used in Fig. 13.
Fig. 15: Possible realization of a multi-pass oscillator with N=16 and K=1 comprising an active medium 103 which is also acting as a flat mirror, focusing m1 type mirrors and a long-pass mirror-array F1 of 16 flat mirrors as shown in Fig. 21 which give rise to 16 reflections (passes) at the active medium. The beam routing is given by 100 and M1 a, M1 b represent the end-mirrors.
Fig. 16: Possible realization of a multi-pass oscillator with N=16 and K=1 comprising an active medium which is also acting as a concave mirror, defocusing m1 type mirrors and a long-pass mirror-array F1 of 16 flat mirrors as shown in Fig. 21 which give rise to 16 reflections (passes) at the active medium. The beam routing is given by 100 and M1 a, M1 b represent the end-mirrors.
Fig. 17: Possible realization of a multi-pass oscillator with N=16 and K=1 comprising an active medium 103 which is also acting as a concave mirror, flat m1 type mirrors, a long-pass mirror-array F1 of 16 flat mirrors as shown in Fig. 21 or Fig. 23, which give rise to 16 reflections (passes) at the active medium, and an additional large aperture convex mirror 115 positioned in between mirror-array F1 and m1 type mirrors. The beam routing is given by 100 and M1 a, M1b represent the end-mirrors.

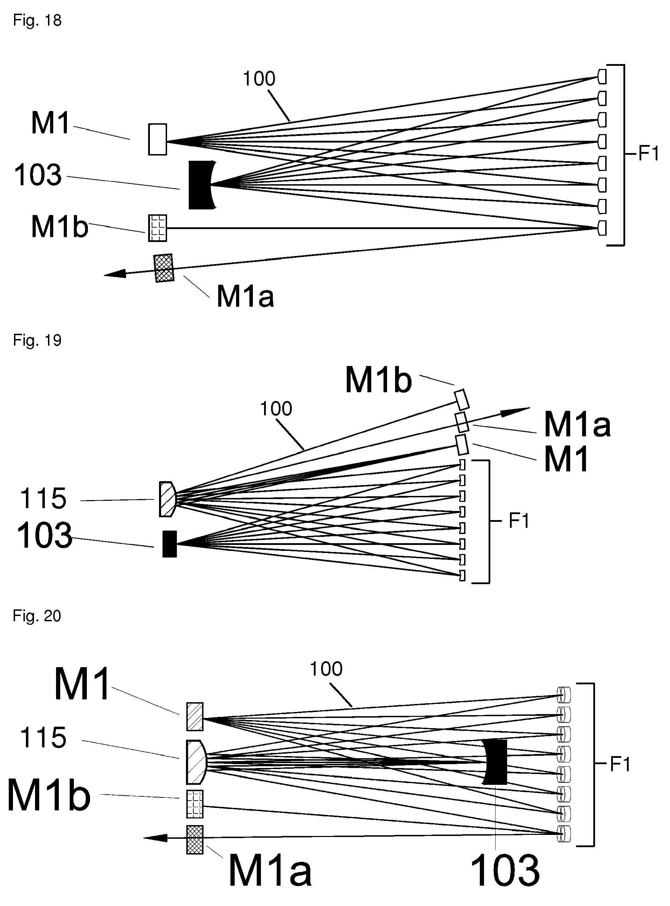

Fig. 18: Possible realization of a multi-pass oscillator with N=16 and K=1 comprising an active medium 103 which is also acting as a concave mirror, flat m1 type mirrors and a long-pass mirror-array F1 of 16 convex mirrors as shown in Fig. 21 and Fig. 23 giving rise to 16 reflections (passes) at the active medium. The beam routing is given by 100 and M1 a, M1b represent the end-mirrors.
Fig. 19: Possible realization of a multi-pass oscillator with N=16 and K=1 comprising an active medium which is also acting as a flat mirror, flat m1 type mirrors, a long-pass mirror-array F1 of 16 concave mirrors as shown in Fig. 21 and Fig. 23 giving rise to 16 reflections (passes) at the active medium, and an additional large aperture convex mirror 115 positioned in between long-pass mirror-array F1 and mirror of type m1. The beam routing is given by 100 and M1a, M1b represent the end-mirrors.
Fig. 20: Possible realization of a multi-pass oscillator with N=16 and K=1 comprising an active medium which is also acting as a concave mirror, flat m1 type mirrors, a long-pass mirror-array F1 of 16 flat mirrors as shown in Fig. 21 and Fig. 23 giving rise to 16 reflections (passes) at the active medium and an additional large aperture convex mirror 115 positioned between reflecting active medium and mirror-array F1. The beam routing is given by 100 and M1 a, M1 b represent the end-mirrors.
Fig. 21: Example of long-pass mirror-array F1 used to realize and fold the beam propagation in an N=16 and K=1 multi-pass oscillator. The beam propagates along the oscillator in the following way (compare also with for example Fig. 15). Starting from the out-coupling mirror M1a the beam is reflected on the array-mirror 1 towards the thin-disk (active medium acting also as a mirror) 103. From here it proceeds to array mirror 2 and is reflected towards M1. From M1 the beam travels back to the array-mirror 3, then to the thin-disk, array-mirror 4 until it reaches again M1. This scheme is iterated until the beam is reflected on the array-mirror 16 towards the end-mirror M1b. From here, the beam propagates the same path in backwards direction until it reaches again mirror M1 a concluding the roundtrip. The beam routing at the mirror-array position given by the numbering can be understood as alternating point-reflections on the active medium projection P103 and on the M1 mirror projection PM1.
Fig. 22 45°-mirror-pair oriented in y-direction. The beam routing is given by 100.
Fig. 23: Example of a long-pass mirror-array F1 used to realize and fold the beam propagation in a N=16 and K=1 multi-pass oscillator, wherein M1 is replaced by a 45°-mirror-pair 109 as shown in Fig. 22. The projection of the active medium P103 position is shown. The vertical line represents the projection of the 45°-mirror-pair PM1/109. The beam propagates along the oscillator in the following way (compare also with for example Fig. 15). Starting from the out-coupling mirror M1a the beam is reflected at the array-mirror 1 towards the thin-disk (active medium acting also as mirror) 103. From here it proceed to array-mirror 2 and is reflected towards M1. From M1 the beam travels back to the array-mirror 3, then to the thin-disk, array-mirror 4 until it reaches again M1. This scheme is iterated until the beam is reflected on array-mirror 16 towards the end-mirror M1b. From here the beam propagates the same path in backwards direction until it reaches again mirror M1 a concluding the roundtrip. The beam routing at the mirror-array position given by the numbering can be understood as alternating point-reflections at the active medium projection P103 and a reflection in x-direction and a fixed shift in y-direction at the 45°-mirror-pair projection PM1/109.
Fig. 24: Possible realization of a multi-pass oscillator with N=8 and K=2 comprising an active medium which is also acting as a concave mirror, a flat mirror M1, flat mirrors of type m2, a long-pass mirror-array F1 of flat mirrors, a short-pass mirror-array F2 of flat mirrors as shown in Fig. 25 or Fig. 26 and additional large aperture convex mirror 115. Both end-mirrors are of type m2. The beam routing is given by 100.
Fig. 25: Schematic view of two particular arrays of mirrors used to realize and fold the beam propagation in an N=8 and K=2 multi-pass oscillator as shown for example in Fig. 24 which result from merging a long-pass mirror-array F1 and a short-pass mirror-array F2. The beam routing at the mirror-array position given by the numbering can be understood as sequence of point reflections: at the active medium projection P103, mirror M1 projection PM1, active medium projection P103, mirror M2 projection PM2. In this way an arrangement of mirrors can be realized with up to 4 lines and arbitrary number of passes.
Fig. 26: Schematic view of a particular mirror-array used to realize and fold the beam propagation in an N=32 and K=2 multi-pass oscillator as shown for example in Fig. 24 which results from merging a long-pass mirror-array F1 with a short-pass mirror-array F2. The projections of the active medium P103, of the mirror M1 (PM1) and the 45°-mirror-pair (PM2) positions are also shown. The beam routing at the mirror-array position given by the numbering can be understood as sequence of reflections: active medium 103, mirror M1, active medium, mirror M2. The active medium and the mirror M1 projection PM1 act as point reflectors while the 45°-mirror-pair (M2) causes a reflection in x-direction and a fixed shift in y-direction. In this way a hexagonal arrangement of mirrors can be realized with 8 lines and an arbitrary number of passes.
Fig. 27: Stability plot for the state-of-the-art single-pass oscillator presented in Fig. 7 (dotted line), for the state-of-the-art 4f-based oscillator with 11 passes shown in Fig.12 (dashed line) and a 11 pass oscillator according to this disclosure with N = 11 and K = 1 (solid line). Soft aperture effects and small deviations between segments are included. Plotted is the beam waist at the active medium position for variations of the dioptric power ΔV of the active medium itself related with thermal lens effects. The stability region for 4f-imaging configurations shrinks linearly with the number of passes while the stability region for multi-segment laser according to this disclosure has a similar width as the single-pass resonator.
Fig. 28: Possible realization of a multi-pass oscillator with N=8 and K=2 comprising an active medium 103 which is also acting as a concave mirror, flat mirrors of type m1, a flat mirror M2, an long-pass mirror-array F1 of flat mirrors, an additional large aperture convex mirror 115, and two large aperture concave mirrors 140. To realize two passes through the thin-disk per segment a 4f-imaging is used. All passes between the thin-disk and M2 have been obtained using a single 4f-imaging optics composed of two large aperture concave mirrors 140. The beam routing is given by 100 and M1 a, M1 b represent the end-mirrors.
Fig. 29: Possible realization of a multi-pass oscillator with N=8 and K=2 comprising a transmitting active medium 103, flat mirrors of type m1, a flat mirror M2, a long-pass mirror-array F1 of concave mirrors, a short-pass mirror-array of flat mirrors F2 and an additional large aperture convex mirror 115. The beam routing is given by 100 and M1 a, M1 b represent the end-mirrors.

Summarizing, the invention presents a scheme overcoming power and energy limitations of state-of-the-art multi-pass laser oscillator. Multi-pass oscillators designed according to this disclosure show improved stability properties for variations of the active medium thermal lens enabling scalability to an arbitrary number of passes though the active medium. This invention applies in particular to high-average power, high-energy mode-locked lasers and to thin-disk lasers. The invention utilizes the soft aperture effect occurring in pumped active media to realize a multi-pass oscillator whose range of stability for variations of the thermal lens in the active medium is similar to the stability achievable with a single-pass oscillator. The roundtrip in such a multi-pass oscillator is given by a sequence of segments with identical layout. The ray transfer matrix of this segment describes a stable optical ring resonator. Several particular embodiment of this multi-pass scheme providing a compact layout are reported.

### REFERENCES CITED

### Patent documents

| | |
|---|---|
| DE 4344227 A1 | July 2. 1993 Laserverstarkersystem |
| US 6834064 B1 | Dec 8. 1999 Mode-locked thin-disk laser |
| US 7590156 B1 | Mai 17. 2004 High intensity MHz mode-locked laser |
| DE 10005194 A1 | Febr. 5. 2000 Laserverstarkersystem |
| DE 10140254 A1 | Aug. 9. 2001 Laserverstarkersystem |

### Other publications:

| | |
|---|---|
| [Gattass 2008] | R. R. Gattass; E. Mazur, "Femtosecond laser micromachining in transparent materials", Nature Photonics 2, 219 - 225 (2008). |
| [Saraceno 2012] | C. J. Saraceno, F. Emaury, O. H. Heckl, C. R. E. Baer, M. Hoffmann, C. Schriber, M. Golling, T. Südmeyer, and U. Keller, "275 W average output power from a femtosecond thin disk oscillator operated in a vacuum environment," Opt. Express 20, 23535-23541 (2012). |
| [Saraceno 2014] | C. J. Saraceno, F. Emaury, C. Schriber, M. Hoffmann, M. Golling, T. Sudmeyer, and U. Keller, "Ultrafast thin-disk laser with 80 µJ pulse energy and 242 W of average power," Opt. Lett. 39, 9-12 (2014). |
| [Gottwald 2012] | T. Gottwald, C. Stolzenburg, D. Bauer, J. Kleinbauer, V. Kuhn, T. Metzger, S. Schad, D. Sutter, and A. Killi, "Recent disk laser development at TRUMPF", Proc. SPIE 8547, 85470C (2012). |
| [Baer 2012] | C. R. E. Baer, O. H. Heckl, C. J. Saraceno, C. Schriber, C. Krdnkel, T. Südmeyer, and U. Keller, "Frontiers in passively mode-locked high-power thin disk laser oscillators," Opt. Express 20, 7054-7065 (2012). |
| [Kogelnik 1966] | H. Kogelnik and T. Li, "Laser Beams and Resonators," Appl. Opt. 5, 1550-1567 (1966). |
| [Siegman 1986] | A. Siegman, "Lasers", University Science Books (1986). |

### Abbreviations

- 103: Active laser medium,
- 103a: First active laser medium,
- 103b: Second active laser medium,
- 104: Segment,
- 109: 45°-mirror-pair,
- 113: Focusing optical element,
- 114: Defocusing optical element,
- 115: Large aperture convex mirror,
- 131: Pole in the stability plot,
- 132: Reduction of beam waist due to soft aperture effects,
- 133: Bump in the stability plot,
- 134: Stability region,
- 135: Additional roundtrip losses needed to suppress the pole in the stability plot,
- 136: Roundtrip transmission versus segment-to-segment deviation,
- 137: Roundtrip transmission versus thermal lens,
- 140: Large aperture concave mirror used for 4f-imaging,
- 150: Laser eigenmode waist,
- 151: Laser eigenmode waist of beam propagating from left to right,
- 152: Laser eigenmode waist of beam propagating from right to left,
- M1: Mirror in between two segments,
- M2: Mirror in the center of a segment,
- M1a: First end-mirror of type m1,
- M2a: First end-mirror of type m2,
- M1b: Second end-mirror of type m1,
- M2b: Second end-mirror of type m2,
- F1: Mirror-array between active medium and mirrors of type m1,
- F2: Mirror-array between active medium and mirrors of type m2,
- PM1: Projection of the mirror M1 on the F1 array plane,
- PM2: Projection of the mirror M2 on the F2 array plane,
- P103: Projection of the active medium on the F1 or the F2 array plane.

## Claims

1. Multi-pass oscillator comprising a resonator and an active medium (103),
wherein the active medium (103) exhibits a soft aperture effect and a thermal lens effect, when the active medium (103) is pumped,
wherein the multi-pass oscillator is configured such that a roundtrip of a resonating laser beam in the multi-pass oscillator comprises a sequence of N concatenated segments (104), wherein the segments comprise an identical layout, wherein N is an integer number greater than 1,
wherein each of said segments (104) is configured such that an associated ray transfer matrix of the segment (104), with a first matrix element A and last matrix element D, fulfills the condition |A+D|<2, when the first matrix element A and the last matrix element D are evaluated neglecting soft aperture effects,
wherein each of said segments (104) is arranged to provide a resonating laser beam with K passes through the active medium (103), wherein K is an integer number greater or equal to 1,
wherein the optical properties of the segments (104) vary from segment (104) to segment (104),
wherein said segment-to-segment variations are either zero such that the eigenmode of the multi-pass oscillator exhibits a design value for the waist evolution along the roundtrip in the resonator, or
said segment-to-segment variations are so small that the oscillator eigenmode waists at each pass in the active medium (103) do not differ by more than a factor of 1.8 from said design value within a range of the active medium's thermal lens variations,
wherein the range of thermal lens variations comprises, particularly consists of thermal lens variation values for which the condition |A+D|<1.5 for the respective segment (104) holds true, when the first matrix element A and the last matrix element D are evaluated neglecting the soft aperture effect.

2. Multi-pass oscillator according to claim 1, wherein each of said segments (104) is configured such that the associated ray transfer matrix of the segment (104) fulfills the condition |A+D|<1.5, particularly |A+D|<1, more particularly |A+D|<0.5, when the first matrix element A and the last matrix element D are evaluated neglecting soft aperture effects.

3. Multi-pass oscillator according to claim 1 or 2, wherein the multi-pass oscillator comprises a plurality of active media, wherein particularly the number of passes through the various active media differ, while the requirement for the same number of passes in each segment (104) are fulfilled individually for each active medium.

4. Multi-pass oscillator according to one of the preceding claims, wherein each segment (104) is configured to provide multiple passes of a resonating laser beam through a single active medium (103) or a plurality of active media, wherein all passes are placed within an effective optical distance smaller that ¹/₂ of the average Rayleigh length of the laser eigenmode at the active media positions, particularly leading to short propagation distances between passes within a segment (104), wherein the said short propagation distance is an effective short propagation distance that can be realized using small physical distances but also otherwise in particular through Relay-imaging, wherein said Rayleigh length is determined assuming the average beam waist at the active medium (103) position or active media positions.

5. Multi-pass oscillator according to one of the preceding claims, wherein the propagation length from the last pass through an active medium in one segment (104) to the first pass through an active medium in the adjacent segment (104) is physically shortened by a pair of telescopes, that are particularly of the type of Galilean telescopes, wherein the telescopes are configured such that the ray transfer matrix of the segment is unchanged.

6. Multi-pass oscillator according to one of the preceding claims, wherein said segments (104) are arranged symmetrically along the beam propagation axis, comprising at least one mirror of type m1 and/or at least one mirror of type m2, wherein the mirrors of type m1 have a common radius of curvature and are arranged in between the segments (104), and mirrors of type m2 have common radius of curvature and are arranged in the center of the segments (104).

7. Multi-pass oscillator according to claim 6, **characterized in that** the multi-pass oscillator is a linear oscillator wherein
a. the resonator comprises a first end-mirror M1a of type m1 placed in between two adjacent segments, and a second end-mirror M1b of type m1 placed in between two adjacent segments or
b. the resonator comprises a first end-mirror M1a of type m1 placed in between two adjacent optical segments, and a second end-mirror M2b of type m2 placed in the center of the segment or
c. the resonator comprises a first end-mirror M2a of type m2 placed in the center of the segment, and a second end-mirror M1b of type m1 placed in between two adjacent segments or
d. the resonator comprises a first end-mirror M2a of type m2 placed in the center of the respective segment, and a second end-mirror M2b of type m2 placed in the center of the respective segment.

8. Multi-pass oscillator according to one of the preceding claims, **characterized in that** the active medium (103) is a thin-disk, particularly comprising Yb:YAG as active gain medium.

9. Multi-pass oscillator according to one of the preceding claims, comprising a long-pass array of mirrors (F1) arranged between the active medium (103) and the mirrors of type m1, wherein the long-pass array of mirrors (F1) is configured to fold the beam path and to support multiple passes in the active medium (103).

10. Multi-pass oscillator according to one of the preceding claims, comprising a short-pass array of mirrors (F2) arranged between the active medium and the mirrors of type m2, wherein the short-pass array of mirrors (F2) is particularly configured to fold the beam path and to support multiple passes in the active medium (103).

11. Multi-pass oscillator according to claim 6 or 9, wherein the multi-pass oscillator comprises a relay imaging arrangement (140) arranged between the active medium (103) and a common mirror M2 of type m2 configured to fold the beam path and to support multiple passes.

12. Multi-pass oscillator according to claim 6, wherein
a. at least one mirror of type m1 is a 45°-mirror-pair,
b. at least one mirror of type m2 is a 45°-mirror-pair,
c. at least one mirror of type m1 is a mirror triplet configured as a corner cube reflector, and/or
d. at least one mirror of type m2 is a mirror triplet configured as a corner cube reflector

13. Multi-pass oscillator according to one of the preceding claims, wherein the multi-pass oscillator comprises at least one optical element to control laser operation as for example mode-locking, frequency selection, polarization selection, enforcement of unidirectional operation, optical dispersion, nonlinear conversion or a combination of them.

14. Multi-pass oscillator according to one of the preceding claims, wherein the multi-pass oscillator comprises one or more deformable mirrors, particularly configured as a common mirror M2 of type m2, and particularly suited for active stabilization.

15. Multi-pass oscillator according to one of the preceding claims, wherein said segment-to-segment variations are so small that the oscillator eigenmode waists at each pass in the active medium (103) do not differ by more than a factor of 1.5, particularly not more than 1.3, from the design value within a range of the active medium's thermal lens variations,
wherein the range of thermal lens variations comprises, particularly consists of thermal lens variation values for which the condition |A+D|<1.5 for the respective segment (104) holds true, when the first matrix element A and the last matrix element D are evaluated neglecting the soft aperture effect.
